# EUROPEAN PATENT APPLICATION

(11) **EP 4 685 884 A1**
(43) Date of publication of application: **28.01.2026**
(21) Application number: 24774898.1
(22) Date of filing: 18.03.2024
(51) Int. Cl.: H01M 6/16, H01M 4/06, H01M 4/46

(54) **LITHIUM PRIMARY BATTERY**

(30) Priority: 20.03.2023 JP 2023044600
(71) Applicant: Panasonic Intellectual Property Management Co., Ltd., Kadoma-shi, Osaka 571-0057 (JP)
(72) Inventor: NISHIKAWA, Takehito, Kadoma-shi, Osaka 571-0057 (JP); ASANO, Yuya, Kadoma-shi, Osaka 571-0057 (JP)
(74) Representative: Novagraaf International SA
(86) International application number: PCT/JP2024/010490
(87) International publication number: WO 2024/195762

(57) **Abstract**

A lithium primary battery includes a positive electrode, a negative electrode, and a nonaqueous electrolyte. The positive electrode contains manganese dioxide. The negative electrode includes a first lithium layer and an aluminum layer laminated with the first lithium layer. The first lithium layer is an alloy layer containing lithium and magnesium. The content of the lithium in the alloy layer is 89% by mass or more and 99.98% by mass or less. The content of the magnesium in the alloy layer is 0.02% by mass or more and 1.5% by mass or less.

## Description

### [Technical Field]

The present disclosure relates to a lithium primary battery.

### [Background Art]

Lithium primary batteries are used as power sources for various electronic devices due to their high energy density and low self-discharge. For a positive electrode of a lithium primary battery, manganese dioxide is used, for example. For a negative electrode of the lithium primary battery, sheet-shaped (foil-shaped) metal lithium or lithium alloy is used, for example.

Patent Literature 1 proposes a nonaqueous electrolyte battery including a positive electrode, a negative electrode, and a nonaqueous electrolyte, wherein the negative electrode includes a mixed alloy layer obtained by alloying the surface of a lithium alloy composed of Li and at least one metal element selected from the group consisting of In, Mg, Sn, Pd, Zn, Pb, Ni, Ag, and Ca with Al, and the mixed alloy layer of the negative electrode is disposed opposite the positive electrode. In Example 2 of Patent Literature 1, a lithium alloy containing 2% by weight of Mg is used.

Patent Literature 2 proposes a cylindrical nonaqueous electrolyte primary battery including an electrode group having a wound structure in which a positive electrode containing manganese dioxide and a negative electrode are spirally wound with a separator therebetween, wherein the negative electrode includes, on one side of a current collector, a metal lithium-containing layer constituted of a continuous single layer, the metal lithium-containing layer covers 85% or more of the area of the metal lithium-containing layer formation surface of the current collector, and a lithium-aluminum alloy is formed at at least a part of a surface of the metal lithium-containing layer located on the opposite side of the current collector.

### [Citation List]

### [Patent Literature]

[Patent Literature 1] Japanese Laid-Open Patent Publication No. H 3-37964
[Patent Literature 2] Japanese Laid-Open Patent Publication No. 2012-138225

### [Summary of Invention]

### [Technical Problem]

There is a need to suppress the deterioration in discharge characteristics of lithium primary batteries.

### [Solution to Problem]

One aspect of the present disclosure relates to a lithium primary battery including a positive electrode; a negative electrode; and a nonaqueous electrolyte, wherein the positive electrode contains manganese dioxide, the negative electrode includes a first lithium layer and an aluminum layer laminated with the first lithium layer, the first lithium layer is an alloy layer containing lithium and magnesium, a content of the lithium in the alloy layer is 89% by mass or more and 99.98% by mass or less, and a content of the magnesium in the alloy layer is 0.02% by mass or more and 1.5% by mass or less.

### [Advantageous Effects of Invention]

According to the present disclosure, deterioration in discharge the characteristics of a lithium primary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

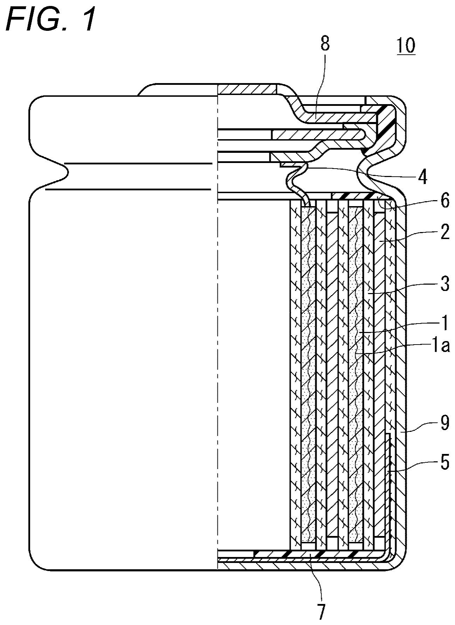

[FIG. 1] FIG. 1 is a front view of a lithium primary battery according to an embodiment of the present disclosure, a part of which is illustrated in cross section.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

A lithium primary battery according to an embodiment of the present disclosure includes a positive electrode, a negative electrode, and a nonaqueous electrolyte. The positive electrode contains manganese dioxide. The negative electrode includes a first lithium layer and an aluminum layer (Al layer) laminated with the first lithium layer. The first lithium layer is an alloy layer containing lithium (Li) and magnesium (Mg). The Li content in the alloy layer is 89% by mass or more and 99.98% by mass or less, while the Mg content in the alloy layer is 0.02% by mass or more and 1.5% by mass or less. Note that the negative electrode is a negative electrode of a non-discharged battery (in pre-used state).

Hereinafter, an alloy containing Li and Mg and substantially free of Al is also referred to as "Li-Mg alloy". A lithium alloy containing Li, Mg, and Al are also referred to as "Li-Mg-Al alloy". Note that "substantially free of Al" means that the amount of Al is less than the detection limit in composition analysis (e.g., ICP emission spectroscopy or atomic absorption spectroscopy) of the lithium alloy.

As a result of the alloy layer containing Mg, the strength of the negative electrode increases to suppress breakage (including partial chipping) of the negative electrode at the end of discharge and deterioration in discharge characteristics due to a decrease in the strength.

Incidentally, Mg can be present in the form of a relatively large solid solution (Mg masses) in an alloy layer. The arrangement of Li atoms is disturbed around the Mg masses, causing the electrons to be scattered as they travel through distorted paths, which increases resistance and deteriorates the discharge characteristics.

By contrast, in the present disclosure, the Al layer is laminated with the alloy layer containing Li and Mg. This allows Al in the Al layer to diffuse into the alloy layer during discharging, so that Al can be alloyed with Mg in the alloy layer. The presence of Al reduces the size of the Mg masses to improve dispersibility of Mg, thereby suppressing deterioration in the discharge characteristics (e.g., low-temperature pulse discharge characteristics) due to an increase in resistance caused by disturbance in the arrangement of Li atoms.

However, when the Mg content is less than 0.02% by mass, the effect of an increase in strength of the negative electrode in the presence of Mg is reduced, and the discharge characteristics at the end of discharge are deteriorated. When the Mg content is more than 1.5% by mass, the influence of the Mg masses increases. As such, even if the Al layer is provided, disturbance of the arrangement of Li atoms is hardly suppressed, involving deterioration in the discharge characteristics. When the Li content in the alloy layer is less than 89% by mass, the amount of Li (absolute amount of Li) in the negative electrode decreases to deteriorate the discharge characteristics.

### (First Lithium Layer)

The first lithium layer is an alloy layer containing Li and Mg. The thickness of the first lithium layer is 50 to 400 µm, for example. From the viewpoint of suppressing breakage of the negative electrode at the end of discharge, the Mg content in the alloy layer is 0.02% by mass or more, preferably 0.1% by mass or more, and more preferably 0.5% by mass or more. From the viewpoint of suppressing formation of Mg masses and ensuring the amount of Li, the Mg content in the alloy layer is 1.5% by mass or less, and preferably 1.0% by mass or less. The range of the Mg content in the alloy layer may be, for example, 0.1% by mass or more and 1.5% by mass or less, or may be 0.5% by mass or more and 1.0% by mass or less.

From the viewpoint of ensuring the amount of Li, the Li content in the alloy layer is 89% by mass or more, and may be 90% by mass or more or 95% by mass or more. The alloy layer contains 0.02% by mass or more of Mg. Accordingly, the Li content in the alloy layer is 99.98% by mass or less.

The alloy layer may contain an optional metal element other than Li and Mg in a range where the Li content is not less than 89% by mass. Examples of the optional metal element include Al, Sn, Ni, Pb, In, and K.

Among them, the alloy layer preferably contains Al as the optional metal element other than Li and Mg. The total content of Mg and Al in the alloy layer is preferably more than 0.02% by mass and 11% by mass or less, more preferably 0.1% by mass or more and 7% by mass or less, and further preferably 0.5% by mass or more and 2% by mass or less. In this case, compared with Al contained in the Al layer, the diffusion paths of Al contained in the alloy layer that reach the vicinity of Mg in the alloy layer are shorter, resulting in smaller energy loss due to diffusion, and a higher likelihood that the dispersibility of Mg will increase. The Al in the alloy layer herein is Al contained in advance in the alloy layer at the time of negative electrode production and does not include Al derived from the aluminum layer.

The Al content in the alloy layer may be 0.01% by mass or more and 8% by mass or less, preferably 0.01% by mass or more (or 0.1% by mass or more) and 5% by mass or less, and further preferably 0.01% by mass or more (or 0.1% by mass or more) and 0.5% by mass or less. The mass ratio of Mg to Al in the alloy layer is Mg:Al = 100:5 to 50, for example.

### (Aluminum Layer)

In the negative electrode, an aluminum layer (Al layer) is laminated with the alloy layer (first lithium layer). In this case, the effect of improving the dispersibility of Mg due to the presence of Al in the surface portion of the alloy layer is more effectively achieved than in the case in which Al is contained in the alloy layer. In addition, the first lithium layer and the aluminum layer are electrochemically alloyed to form a Li-Al alloy. Micronization of the Li-Al alloy increases the surface area of the negative electrode.

The Al layer is a layer containing at least Al, may be an Al metal layer containing only Al, or may be an alloy layer containing Al and an optional metal (e.g., Cu, Fe, Si, Mn, or Zn) other than Al. From the viewpoint of promoting alloying of Li and Al, it is desirable that the content of the optional metal other than Al in Al layers is small. The Al content in the Al layer may be, for example, 99% by mass or more or may be 100% by mass. The thickness of the Al layer is 3 to 15 µm, for example.

### (Second Lithium Layer)

The negative electrode may include a second lithium layer provided between the first lithium layer and the aluminum layer. In this case, the aluminum layer is laminated with the first lithium layer with the second lithium layer therebetween. Preferably, the second lithium layer is substantially free of Mg. In this case, Li and Al are more easily alloyed than in the case in which the aluminum layer is directly laminated with the first lithium layer containing Mg. The second lithium layer is a layer containing at least Li, may be a Li metal layer containing only Li, or may be an alloy layer containing Li and an optional metal (e.g., Sn, Ni, Pb, In, or K) other than Li. From the viewpoint of promoting alloying of Li and Al, it is desirable that the content of the optional metal other than Li in the second lithium layer is small. The Li content in the second lithium layer may be, for example, 95% by mass or more or 98% by mass or more, or may be 100% by mass. The thickness of the second lithium layer is 30 to 100 µm, for example.

The composition of each layer constituting the negative electrode, such as the first lithium layer is determined by inductively coupled plasma (ICP) emission spectroscopy or atomic absorption spectroscopy (AAS).

Hereinafter, the lithium primary battery of the present disclosure will be described in more detail.

### (Positive Electrode)

The positive electrode contains manganese dioxide as a positive electrode active material. A battery including a positive electrode containing manganese dioxide is capable of performing high-rate discharge even at low temperatures and can exhibit excellent low-temperature pulse discharge characteristics. If the positive electrode active material is graphite fluoride, the pulse discharge characteristics cannot be exhibited in an environment at a cryogenic temperature of -40° C due to an increase in viscosity of the nonaqueous electrolyte.

As the manganese dioxide, electrolytic manganese dioxide is preferably used. The manganese dioxide may be in a mixed crystal state containing multiple types of crystal phases. The positive electrode may contain a manganese oxide other than manganese dioxide. Examples of the manganese oxide other than manganese dioxide include MnO, Mn₃O₄, Mn₂O₃, and Mn₂O₇. Preferably, manganese dioxide is the main component of the manganese oxides contained in the positive electrode. Here, the main component means that the proportion of the manganese dioxide in the manganese oxides is 50% by mass or more. The proportion of the manganese dioxide in the manganese oxides may be 70% by mass or more or 90% by mass or more.

The positive electrode may contain a positive electrode mixture containing, for example, a positive electrode active material, a binder, and a conductive agent. Examples of the binder include rubber particles, acrylic resins, and fluorocarbon resins such as polytetrafluoroethylene. Examples of the conductive agent include conductive carbon materials. Examples of the conductive carbon materials include natural graphite, artificial graphite, carbon black, and carbon fibers.

The positive electrode may further include a positive electrode current collector that holds the positive electrode mixture. Examples of the material of the positive electrode current collector include stainless steel, aluminum, and titanium.

In the case of a coin-shaped battery, a ring-shaped positive electrode current collector having an L-shaped cross section may be attached to a positive electrode mixture pellet to form a positive electrode. Alternatively, the positive electrode may be composed of only the positive electrode mixture pellet. The positive electrode mixture pellet can be obtained by, for example, compression molding a positive electrode mixture in a wet state prepared by adding an appropriate amount of water to a positive electrode active material and the like, followed by drying.

In the case of a cylindrical battery, a positive electrode including a sheet-shaped positive electrode current collector and a positive electrode mixture layer held by the positive electrode current collector can be used. As the sheet-shaped positive electrode current collector, a perforated current collector is preferable. Examples of the perforated current collector include expanded metal, mesh, and a punched metal sheet. The positive electrode mixture layer is obtained by, for example, applying the aforementioned positive electrode mixture in a wet state to the surface of the sheet-shaped positive electrode current collector or filling it into the positive electrode current collector, applying pressure in the thickness direction, and drying.

### (Negative Electrode)

The negative electrode includes a laminate of a first lithium layer and an aluminum layer (or a laminate of a first lithium layer, a second lithium layer, and an aluminum layer). For formation of each layer, a foil-shaped or sheet-shaped substrate is used, for example. The substrate is formed into any shape and to any thickness according to, for example, the shape, dimension, or standard performance of the lithium primary battery.

The negative electrode may include a negative electrode current collector (e.g., copper foil) carrying the laminate. However, the negative electrode can be constituted of only the laminate without using a negative electrode current collector, because Mg having relatively high strength remains at the end of discharge due to the first lithium layer containing Mg. By not using a negative electrode current collector, a high energy density can be achieved. As a result of the first lithium layer containing Mg, the negative electrode can be prevented from being broken at the end of discharge, so that Li can be effectively and fully consumed without any loss.

In the case of a coin-shaped battery, the negative electrode may be produced by, for example, laminating and pressing an Al-containing foil onto a disk-shaped Li-Mg alloy (or a Li-Mg-Al alloy). In the case of a cylindrical battery, the negative electrode may be produced by, for example, laminating and pressing an Al-containing foil onto a Li-Mg alloy foil (or a Li-Mg-Al alloy foil).

### (Nonaqueous Electrolyte)

The nonaqueous electrolyte contains a nonaqueous solvent and a lithium salt, for example. The concentration of lithium ions (total concentration of lithium salt) contained in the nonaqueous electrolyte is, for example, 0.2 mol/L or more and 2.0 mol/L or less, and may be 0.3 mol/L or more and 1.5 mol/L or less.

Examples of the nonaqueous solvent include organic solvents typically used in nonaqueous electrolytes of lithium primary batteries. Examples of the nonaqueous solvents include ethers, esters, and carbonic acid esters. Examples of the nonaqueous solvent that can be used include dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, and propyl acetate. The nonaqueous electrolyte may contain one nonaqueous solvent or two or more nonaqueous solvents.

From the viewpoint of improving the discharge characteristics of the lithium primary battery, the nonaqueous solvent preferably contains a cyclic carbonic acid ester having a high boiling point and a chain ether having a low viscosity even at low temperatures. The cyclic carbonic acid ester preferably includes at least one selected from the group consisting of PC and EC, and PC is particularly preferable. The chain ether preferably includes DME.

Examples of the lithium salt include lithium salts that are used as solutes in lithium primaries batteries. Examples of the lithium salts such as above include LiCF₃SO₃, LiClO₄, LiBF₄, LiPF₆, LiRaSO₃ (Ra is a fluorinated alkyl group having a carbon number of 1 to 4), LiFSO₃, LiN(SO₂Rb)(SO₂Rc) (Rb and Rc are each independently a fluorinated alkyl group having a carbon number of 1 to 4), LiN(FSO₂)₂, LiN(SO₂CF₃)₂, LiN(SO₂F)(POF₂), LiPO₂F₂, LiB(C₂O₄)₂, and LiBF₂(C₂O₄). Among these, at least one selected from the group consisting of LiCF₃SO₃, LiBF₄, and LiN(FSO₂)₂) is preferable from the viewpoint of stabilization with respect to a lithium alloy containing Mg. The nonaqueous electrolyte may contain one type or two or more types thereof.

The nonaqueous electrolyte may further contain an optional component such as an additive. Examples of the optional component include propane sultone, propene sultone, ethylene sulfite, 3,2-dioxathiolane-2,2-dioxide, vinylene carbonate, vinyl ethylene carbonate, fluoroethylene carbonate, adiponitrile, succinonitrile, and succinic anhydride. The optional component may be a lithium salt and may be capable of producing lithium ions.

### (Separator)

The lithium primary battery typically includes a separator provided between the positive electrode and the negative electrode. As the separator, a porous sheet should be used that is formed of an insulating material resistant to the internal environment of the lithium primary battery. Specific examples thereof include a nonwoven fabric made of a synthetic resin, a microporous film made of a synthetic resin, and a laminate of these.

Examples of the synthetic resin used in the nonwoven fabric include polypropylene, polyphenylene sulfide, and polybutylene terephthalate. Examples of the synthetic resin used in microporous films include polyolefin resins such as polyethylene, polypropylene, and ethylenepropylene copolymers. The microporous film may contain inorganic particles according to necessity.

The thickness of the separator is 5 µm or more and 100 µm or less, for example.

No particular limitations are placed on the configuration of the lithium primary battery. The lithium primary battery may be a coin-shaped battery including a stacked electrode group configured by stacking the positive electrode having a disk shape and the negative electrode having a disk shape with the separator therebetween. Alternatively, it may be a cylindrical battery including a wound electrode group configured by spirally winding the positive electrode having a band shape and the negative electrode having a band shape with the separator therebetween.

FIG. 1 is a front view of a lithium primary battery according to an embodiment of the present disclosure, a part of which is illustrated in cross section. In a lithium primary battery 10, an electrode group in which a positive electrode 1 and a negative electrode 2 are wound with a separator 3 therebetween is housed in a battery case 9 together with a nonaqueous electrolyte (not illustrated). A sealing plate 8 is attached to the opening of the battery case 9. A positive electrode lead 4 connected to a current collector 1a of the positive electrode 1 is connected to the sealing plate 8. A negative electrode lead 5 connected to the negative electrode 2 is connected to the battery case 9. In addition, an upper insulating plate 6 and a lower insulating plate 7 are provided at the upper and lower parts of the electrode group, respectively, for preventing inner short circuits.

### <<Supplemental Remarks>>

According to the above description of the embodiments, the following techniques are disclosed.
(Technique 1) A lithium primary battery including
   a positive electrode; a negative electrode; and a nonaqueous electrolyte,
   wherein the positive electrode contains manganese dioxide,
   the negative electrode includes a first lithium layer and an aluminum layer laminated with the first lithium layer,
   the first lithium layer is an alloy layer containing lithium and magnesium,
   a content of the lithium in the alloy layer is 89% by mass or more and 99.98% by mass or less, and
   a content of the magnesium in the alloy layer is 0.02% by mass or more and 1.5% by mass or less.
(Technique 2) The lithium primary battery according to Technique 1, wherein the alloy layer contains aluminum, and
   a content of a sum of the magnesium and the aluminum in the alloy layer is more than 0.02% by mass and 11% by mass or less.
(Technique3) The lithium primary battery according to Technique 2, wherein a content of the aluminum in the alloy layer is 0.01% by mass or more and 0.5% by mass or less.
(Technique 4) The lithium primary battery according to any one of Techniques 1 to 3, wherein the negative electrode includes a second lithium layer provided between the first lithium layer and the aluminum layer.

### [Examples]

Hereinafter, the present disclosure will be specifically described based on examples and comparative examples. However, the present disclosure is not limited to the following examples.

### <<Examples 1 to 4 and Comparative Examples 1 to 3>>

### (Positive Electrode Production)

A positive electrode mixture in a wet state was prepared by adding 5 parts by mass of Ketjen Black being a conductive agent, 5 parts by mass of polytetrafluoroethylene being a binder, and an appropriate amount of pure water to 100 parts by mass of electrolytic manganese dioxide (MnO₂) being a positive electrode active material, followed by kneading.

Next, a positive electrode precursor was produced by filling a positive electrode current collector with the positive electrode mixture. The positive electrode current collector was formed of expanded metal made of stainless steel (SUS 444) and having a thickness of 0.1 mm. The positive electrode precursor was then dried, rolled by roll press, and cut to a length of 3.5 cm and a width of 20 cm to obtain a positive electrode. Thereafter, a portion of the filled positive electrode mixture was peeled off, and one end of a positive electrode lead made of SUS 444 was resistance-welded to the exposed portion of the positive electrode current collector.

### (Negative Electrode Production)

An Al metal foil (length 200 mm, width 35 mm, thickness 7 µm) was laminated onto a Li-Mg alloy foil (length 200 mm, width 37 mm, thickness 220 µm) and pressed thereto. Thus, a negative electrode constituted of a laminate of a Li-Mg alloy layer (first lithium layer) and an Al metal layer was obtained. One end of a nickel-made negative electrode lead was connected to a predetermined part of the negative electrode by pressure welding. The Mg content in the Li-Mg alloy foil was set as shown in Table 1. The alloy foil contained only Li, except for Mg. The composition of the lithium alloy was determined by ICP emission spectroscopy or atomic absorption spectroscopy. Note that "0% by mass" for the Mg content indicates that Mg was not detected by the ICP emission spectroscopy and the atomic absorption spectroscopy.

### (Electrode Group Production)

An electrode group was produced by winding the positive electrode and one of the negative electrodes with a separator therebetween. A polypropylene-made microporous film having a thickness of 25 µm was used as the separator.

### (Nonaqueous Electrolyte Preparation)

A nonaqueous electrolyte was prepared by dissolving LiCF₃SO₃ in a mixed solvent of PC, EC, and DME (volume ratio 3:2:5) at a concentration of 0.5 mol/L.

### (Lithium Primary Battery Assembly)

The electrode group was housed in a cylindrical battery case serving also as a negative electrode terminal. As the battery case, an iron case (outer diameter 17 mm, height 45.5 mm) was used. Subsequently, the nonaqueous electrolyte was injected into the battery case, and the opening of the battery case was then closed with a metal-made sealing plate serving also as a positive electrode terminal. The other end of the positive electrode lead was connected to the sealing plate and the other end of the negative electrode lead was connected to the inner bottom surface of the battery case. Thus, a lithium primary battery was prepared. Note that in Table 1, A1 to A4 are batteries of Examples 1 to 4, respectively, and B1 to B3 are batteries of Comparative Examples 1 to 3, respectively.

### <<Comparative Example 4>>

A battery B4 of Comparative Example 4 was produced in the same manner as the battery A2 of Example 2, except that only the Li-Mg alloy foil was used as the negative electrode without laminating the Al foil onto the Li-Mg alloy foil.

The obtained batteries of Examples and Comparative Examples were aged for 7 days under an atmosphere at 45°C after the assembly, and evaluated as follows.

### [Evaluation]

Each of the aged batteries was subjected to constant current discharge at 2.5 mA in an environment at 20°C until its depth of discharge (DOD) reached 90% (until discharge capacity reached 90% of rated capacity). Thereafter, the battery at 90% DOD was subjected to pulse discharge at 300 mA for 1 second in an environment at -40°C to determine the lowest potential at that time.

The evaluation results are shown in Table 1.

**[Table 1]**

| Lithium primary battery | Negative electrode | | Lowest voltage in low-temperature pulse discharge (V) |
|---|---|---|---|
| | Li-Mg alloy foil | Al metal foil | |
| | Mg content (% by mass) | | |
| B1 | 0 | Present | 1.40 |
| B2 | 0.01 | Present | 1.48 |
| A1 | 0.02 | Present | 1.60 |
| A2 | 0.5 | Present | 1.64 |
| A3 | 1 | Present | 1.63 |
| A4 | 1.5 | Present | 1.61 |
| B3 | 2 | Present | 1.51 |
| B4 | 0.5 | Absent | 1.43 |

In the batteries A1 to A4, the lowest voltage in the low-temperature pulse discharge was high, and excellent low-temperature pulse discharge characteristics were exhibited.

The low-temperature pulse characteristics deteriorated in the battery B1 and B2 having a Mg content in the Li-Mg alloy foil of less than 0.02% by mass and the battery B3 having a Mg content in the Li-Mg alloy foil of more than 1.5% by mass. In the battery B4, the low-temperature pulse discharge characteristics deteriorated due to nonuse of the Al metal foil in the negative electrode production.

### <<Examples 5 to 15 and Comparative Examples 5 to 8>>

In the negative electrode production, a Li-Mg-Al alloy foil (length 200 mm, width 37 mm, and thickness of 220 µm) was used in place of the Li-Mg alloy foil to obtain a negative electrode constituted of a stacked body of a Li-Mg-Al alloy layer (first lithium layer) and an Al metal layer. The contents of Mg and Al in the Li-Mg-Al alloy foil were set as shown in Tables 2 and 3. The alloy foil contained only Li, except for Mg and Al. Batteries A5 to A15 of Examples 5 to 15 and batteries B5 to B8 of Comparative Examples 5 to 8 were produced and evaluated in the same manner as the battery Al of Example 1 except the above. The evaluation results are shown in Tables 2 and 3.

**[Table 2]**

| Lithium primary battery | Negative electrode | | | | Lowest voltage in low-temperature pulse discharge (V) |
|---|---|---|---|---|---|
| | Li-Mg-Al alloy foil | | | Al metal foil | |
| | Mg content (% by mass) | Al content (% by mass) | Mg + Al content (% by mass) | | |
| A5 | 0.5 | 0.01 | 0.51 | Present | 1.61 |
| A6 | 0.5 | 0.1 | 0.6 | Present | 1.66 |
| A7 | 0.5 | 0.2 | 0.7 | Present | 1.68 |
| A8 | 0.5 | 0.5 | 1.0 | Present | 1.67 |
| A9 | 0.5 | 2 | 2.5 | Present | 1.65 |
| A10 | 0.5 | 5 | 5.5 | Present | 1.65 |
| A11 | 0.5 | 8 | 8.5 | Present | 1.61 |
| A12 | 0.5 | 10.5 | 11 | Present | 1.60 |
| B5 | 0.5 | 11.5 | 12 | Present | 1.53 |

**[Table 3]**

| Lithium primary battery | Negative electrode | | | | Lowest voltage in low-temperature pulse discharge (V) |
|---|---|---|---|---|---|
| | Li-Mg-Al alloy foil | | | Al metal foil | |
| | Mg content (% by mass) | Al content (% by mass) | Mg + Al content (% by mass) | | |
| B6 | 0 | 0.2 | 0.2 | Present | 1.39 |
| B7 | 0.01 | 0.2 | 0.21 | Present | 1.52 |
| A13 | 0.02 | 0.2 | 0.22 | Present | 1.65 |
| A7 | 0.5 | 0.2 | 0.7 | Present | 1.68 |
| A14 | 1 | 0.2 | 1.2 | Present | 1.66 |
| A15 | 1.5 | 0.2 | 1.7 | Present | 1.65 |
| B8 | 2 | 0.2 | 2.2 | Present | 1.49 |

The batteries A5 to A15 exhibited excellent low-temperature pulse discharge characteristics. Due to the Li content being less than 89% by mass, the low-temperature pulse discharge characteristics deteriorated in the battery B5 having a total content of Mg and Al in the Li-Mg-Al alloy foil of more than 11% by mass. In the batteries B6 and B7 having a Mg content in the alloy foil of less than 0.02% by mass and the battery B8 having a Mg content in the alloy foil of more than 1.5% by mass, the low-temperature pulsed discharge characteristics deteriorated.

### <<Example 16>>

In the negative electrode production, a Li metal foil (length 200 mm, width 37 mm, thickness 50 µm) and an Al metal foil (length 200 mm, width 37 mm, thickness 7 µm) were laminated onto a Li-Mg alloy foil (length 200 mm, width 37 mm, thickness 170 µm) in this order, and pressed thereto. Thus, a negative electrode constituted of a laminate of a Li-Mg alloy layer, a Li metal layer, and an Al metal layer was obtained. The Mg content in Li-Mg alloy foil was set to 0.5% by mass. A battery A16 was produced and evaluated in the same manner as the battery A1, except for the above.

### <<Example 17>>

In the negative electrode production, a Li foil (length 200 mm, width 37 mm, thickness: 50 µm) and an Al foil (length 200 mm, width 37 mm, thickness: 7 µm) were laminated onto a Li-Mg-Al alloy foil (length 200 mm, width 37 mm, thickness: 170 µm) in this order and pressed thereto. Thus, a negative electrode constituted of a laminate of a Li-Mg-Al alloy layer, a Li metal layer, and an Al metal layer was obtained. The Mg content and the Al content in the Li-Mg-Al alloy foil were set to 0.5% by mass and 0.2% by mass, respectively. A battery A17 was produced and evaluated in the same manner as the battery A1, except for the above.

The evaluation results are shown in Table 4.

**[Table 4]**

| Lithium primary battery | Negative electrode | Lowest voltage in low-temperature pulse discharge (V) |
|---|---|---|
| A16 | Li-Mg alloy foil + Li metal foil + Al metal foil (Mg content in alloy foil: 0.5% by mass) | 1.63 |
| A17 | Li-Mg-Al alloy foil + Li metal foil + Al metal foil (Mg content in alloy foil: 0.5% by mass) (Al content in alloy foil: 0.2% by mass) | 1.66 |

The batteries A16 andA17 also exhibited excellent low-temperature pulse discharge characteristics.

### [Industrial Applicability]

The lithium primary battery of the present disclosure is suitably used, for example, as a main power supply or a memory backup power supply for various meters (e.g., smart meters for electricity, water, and gas).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: positive electrode, 1a: positive electrode current collector, 2: negative electrode, 3: separator, 4: positive electrode lead, 5: negative electrode lead, 6: upper insulating plate, 7: lower insulating plate, 8: sealing plate, 9: battery case, 10: lithium primary battery

## Claims

1. A lithium primary battery comprising:
a positive electrode; a negative electrode; and a nonaqueous electrolyte,
wherein the positive electrode contains manganese dioxide,
the negative electrode includes a first lithium layer and an aluminum layer laminated with the first lithium layer,
the first lithium layer is an alloy layer containing lithium and magnesium,
a content of the lithium in the alloy layer is 89% by mass or more and 99.98% by mass or less, and
a content of the magnesium in the alloy layer is 0.02% by mass or more and 1.5% by mass or less.

2. The lithium primary battery according to claim 1,
wherein the alloy layer contains aluminum, and
a content of a sum of the magnesium and the aluminum in the alloy layer is more than 0.02% by mass and 11% by mass or less.

3. The lithium primary battery according to claim 2,
wherein a content of the aluminum in the alloy layer is 0.01% by mass or more and 0.5% by mass or less.

4. The lithium primary battery according to claim 1,
wherein the negative electrode includes a second lithium layer provided between the first lithium layer and the aluminum layer.
